# EUROPEAN PATENT SPECIFICATION

(11) **EP 1 159 590 B1**
(45) Date of publication and mention of the grant of the patent: **22.10.2008**
(21) Application number: 00909492.1
(22) Date of filing: 10.03.2000
(51) Int. Cl.: G01J 5/10, G01J 5/08

(54) **RADIATION SENSOR**
STRAHLUNGSSENSOR
CAPTEUR DE RAYONNEMENT

(30) Priority: 10.03.1999 US 262896; 07.04.1999 US 287464; 07.04.1999 US 287465
(43) Date of publication of application: 05.12.2001
(73) Proprietor: MELEXIS, NV, 8900 Ieper (BE)
(72) Inventor: CHARLIER, Olivier, B-1170 Bruxelles (BE); BETTS, William, Robert, Chasetown Staffordshire WX7 8XA (GB); DIELS, Roger, B-3071 Erps - Kwerps (BE)
(74) Representative: Kazi, Ilya
(86) International application number: PCT/GB2000/000906
(87) International publication number: WO 2000/054012

(56) References cited:
- DD-A- 147 872
- DE-A- 3 518 262
- US-A- 4 365 896
- US-A- 4 435 093
- US-A- 4 560 874
- US-A- 5 200 624

## Description

The present invention relates in general to radiation sensors, particularly to infrared (IR) sensing devices, and more particularly to a self-calibrating IR sensing device.

IR sensors are used to measure temperatures of remote objects by detecting the infrared radiation emitted from the target object. In a typical configuration, IR radiation enters the housing in which the sensor element is located through an IR transparent window and impinges upon the sensor. The temperature is typically measured by detecting the IR radiation and determining its effect on a thermally isolated radiation absorbing area of the sensor. In many typical applications the radiation from the remote object is gathered and focussed onto the sensing element by an external mirror arrangement for increased effectiveness. When the surface of the window or the mirror arrangement becomes contaminated by particles or residues that absorb IR radiation, incoming IR radiation is absorbed such that the amount of IR radiation passing through the window becomes attenuated. The IR transmission capability of the window and the IR reflectance capability of the mirror arrangement is therefore degraded by the presence of IR-absorbing contaminants. Such degradation results in erroneous temperature readings by the sensor. Accordingly, what is needed in the art is the ability to easily counter the attenuation effects of IR-absorbing contaminants deposited on the transmission window and mirror arrangement so as to accurately detect and measure the IR radiation received from a target object.

Embodiments of the present invention provide a self-calibrating infrared (IR) sensing device having the capability to measure the attenuation effects of surface contamination on the transmission window and, in one aspect, a mirror arrangement. The sensing device of the present invention also includes the capability to adjust the gain of the sensor to counter the attenuation caused by any IR-absorbing contaminants on the transmission window or mirror arrangement.

US-A-4365896 discloses an optical attenuation monitor system and method with a back-scattered detector which feeds a display, alarm and instrument compensation function. EP-A-3518262 discloses an infrared radiation sensing device with a radiation sensor within an housing.

Apparatus according to the invention is set out in Claim 1 and a method aspect is defined in Claim 13.

According to a first embodiment of the invention, an IR sensing device includes an IR sensor mounted in a housing having an IR transparent window that allows IR radiation originating from outside the housing, for example from a target source, to be directed towards the sensor. The radiation detected by the sensor is made up of a combination of the external IR radiation entering the housing through the IR transparent window and the inherent background radiation from the inner surface of the housing. The IR sensor includes a thermally isolated area of material selected for its ability to absorb IR radiation at a specific frequency or at a range of radiation frequencies. The incoming radiation is absorbed, thereby raising the temperature of the IR absorbing material. A temperature measuring unit coupled to the absorbing material measures the increase in temperature and generates a proportional electronic signal indicative of the temperature. The electronic signal is received and processed by a processor.

According to the invention, an IR radiator is included within the sensing device housing. The IR radiator is preferably shielded from the IR absorbing material by an internal screen. When activated, the radiator emits IR radiation that passes through the window and is lost to the outside if there is no contamination. If, however, the surface of the window is contaminated, radiation will be absorbed by the contaminants, thereby raising their temperature. This increase in temperature results in a return signal (i.e., IR emissions from the contaminants) that is detected by the sensor. For example, if the radiator is pulsed, the resulting return signal will be in the shape of decaying pulses. The magnitude of the return signal indicates the amount of contaminant on the surface of the window. The return signal is detected and measured by the IR sensor, and is used to signal a warning and/or determine the amount of gain necessary to compensate for the loss of true signal caused by the presence of the contamination. Additionally, IR radiation that falls on the inside of the housing is reflected back to the sensor. If the inside surface of the housing is uncontaminated, the return signal will be as expected. If, however, the housing is internally corroded or contaminated, perhaps indicative of leakage, the return signal will be higher as the contamination heats up and emits IR radiation. Again, the appropriate gain is determined to compensate for any contamination in the housing.

According to another embodiment of the invention a method is provided for measuring the temperature of a remote target object with an IR sensing device, wherein the IR sensing device includes an IR sensor mounted in a housing, the housing having a window through which IR radiation from a remote target object enters the device and impinges on the IR sensor. The method typically includes the step of generating a first IR radiation signal with an IR radiator located within the housing, such that if there is any IR-absorbing contamination on the window, the contamination absorbs at least a portion of the first IR radiation signal and emits a return IR radiation signal. The method also typically includes the steps of detecting the return IR radiation signal with the IR sensor, and generating a first electric signal in response to the return IR radiation signal, wherein the first electric signal is proportional to the return signal. The method further typically includes the steps of analyzing the first electric signal with a processor to determine the amount of IR radiation in the return signal, wherein the amount of IR radiation in the return signal is indicative of the amount of IR absorbing contamination on the window. Thereafter a remote IR radiation signal generated by the remote object is detected, wherein the remote IR radiation signal is indicative of the temperature of the remote object, wherein the remote signal is attenuated by a first amount by the IR absorbing contamination before being detected by the IR sensor. The method also typically includes the step of compensating for the first amount of attenuation in the detected remote IR radiation signal so as to accurately determine the temperature of the remote object.

According to an alternative embodiment of the invention an external mirror arrangement reflects the generated first IR signal back to the IR sensing device, such that if there is any IR-absorbing contamination on the window, the contamination absorbs at least a portion of the reflected IR radiation signal. The IR sensor then detects this reflected signal, generating a first electric signal proportional to the detected signal. Here, the magnitude of the detected signal is indicative of the amount of IR absorbing contamination on the window.

According to yet another embodiment of the invention, an Infra Red (IR) sensing device is provided comprising electronic interface means for processing the electrical signal generated by the sensor, wherein the interface means generates a signal representative of the IR radiation detected by the sensor. Here, the IR radiation means is arranged as before to radiate IR energy so as to have a heating effect on any non IR transparent contamination obscuring the IR transparent window, and there is included a first control means for controlling the IR radiation means to radiate IR energy for a known period; a signal processing means for determine the degree of contamination obscuring the IR transparent window by measuring the shape and characteristics of the electrical signal during and after the known period; and a second control means for modifying the characteristics of the electronic interface means to compensate for the degree of contamination.

Although described above in the context of IR sensors, to which the invention is most preferably applied (for an IR sensor, the detection of contaminants by means of heat absorbed and re-radiated is advantageous) it has been appreciated pursuant to the invention that the principles may be applied to other radiation, particularly optical sensors. Further aspects and preferred features may be found in the claims.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings. In the drawings, like reference numbers indicate identical or functionally similar elements.
Figure 1 is a sectional schematic diagram of a typical IR sensor arrangement according to the present invention;
Figure 2 is a sectional schematic diagram of an assembled IR sensing device including the IR sensor of Figure 1, according to an embodiment of the present invention;
Figure 3 is a schematic diagram showing effects of contamination on the IR transmission of the transmission window;
Figure 4 is a schematic diagram showing an arrangement of an IR sensing device including an IR radiator according to an embodiment of the present invention;
Figure 5 is a schematic diagram showing an arrangement of an IR sensing device including an IR radiator according to an embodiment of the present invention;
Figure 6 is a schematic diagram showing the effects of IR radiation emitted from the IR radiator with an external mirror arrangement ;
Figure 7 is a schematic diagram showing an arrangement of two IR sensors ;
Figures 8a and 8b illustrate an example of an IR pulse and associated return signals, respectively, according to an embodiment of the present invention; and
Figure 9 is a schematic diagram showing an example of an internal reflector.

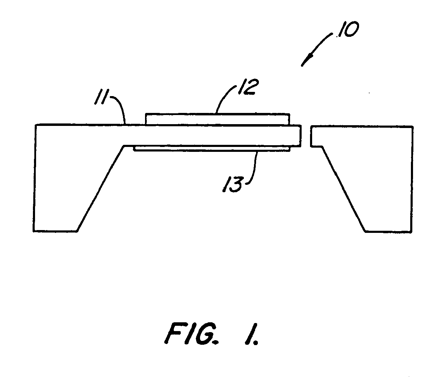

Figure 1 is a sectional schematic diagram of an IR sensor arrangement 10 according to an embodiment of the present invention. IR sensor 10 includes an area of IR absorbing material 12 mounted on a substrate 11 with a temperature measuring unit 13 positioned as is well known to effectively measure the temperature of IR absorbing material 12. Absorbing material 12 includes material selected for its ability to absorb IR radiation at a specific frequency or at a range of radiation frequencies as required for specific applications. In preferred aspects, temperature measuring unit 13 is any temperature measuring device capable of generating an electrical signal responsive to and indicative of the temperature of the IR absorbing material. In more preferred aspects, temperature measuring unit 13 includes a plurality of thermopiles that generate a voltage on the order of approximately 100 microvolts per degree Celsius temperature rise. Examples of such thermopiles include Polysilicon - Aluminum junctions and Aluminum - Diffusion junctions. One hundred such thermopiles connected in series generate approximately ten milli-volts for a one degree Celsius temperature rise. This signal is amplified using well know means or circuitry arranged to compensate for such inherent errors as offsets, gain variations, unwanted temperature dependencies and drift. The parameters associated with the correction of these inherent errors are stored in a nonvolatile memory to permit calibration of the sensing arrangement after manufacture and installation in a housing as will be described in more detail below. Calibration of the sensor is accomplished, for example, by using a heating element embedded in insulated absorbing area 12. Passing a current through the heating element causes the temperature of the absorbing material 12 to rise by a controlled amount. This effect is measured and the results are used to calibrate the sensor.

Substrate 11 is preferably as thin as possible so that temperature measurement unit 13 is as close as possible to IR absorbing material 12. In addition, substrate 11 is preferably arranged such that the thin section of substrate 11 between absorbing material 12 and temperature measuring unit 13 is thermally isolated from the bulk of the arrangement. This helps ensure that heat loss from (the thin area of) substrate 11 does not degrade the accuracy of the signal generated by temperature measurement unit 13.

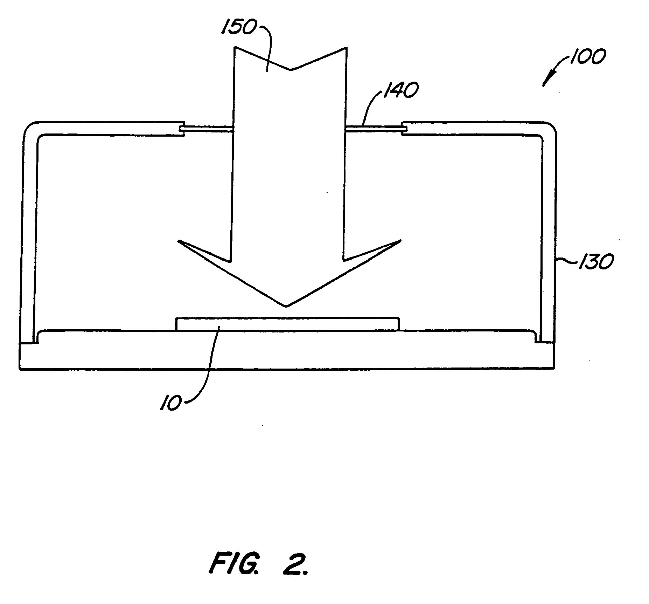

Figure 2 is a sectional schematic diagram of an assembled IR sensing device 100 including IR sensor 10, according to an embodiment of the present invention. IR sensor 10 is mounted in a housing 130 having a window 140 through which IR radiation 150 can pass substantially unhindered. The IR radiation falling on IR sensor 10 is absorbed by IR absorbing material 12, which causes an increase in the temperature of absorbing material 12 and a corresponding signal change from temperature measurement unit 13.

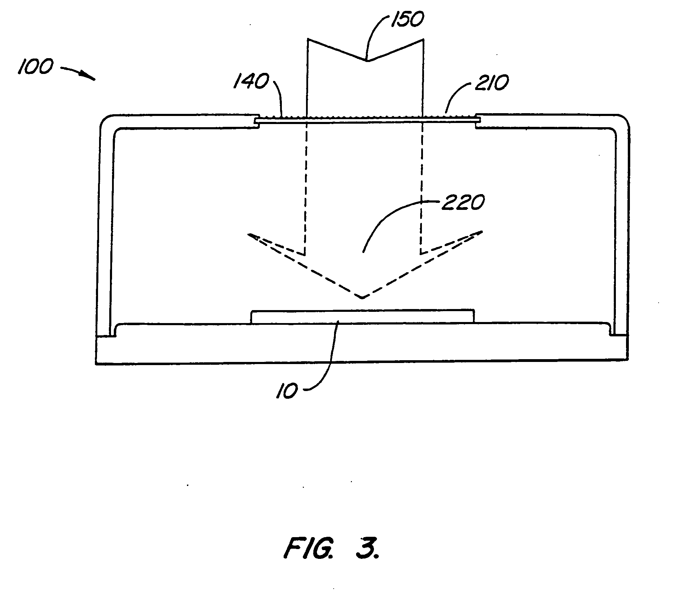

Figure 3 is a schematic diagram showing effects of contaminants 210 on the IR transmission properties of transmission window 140. When present on window 140, contaminants 210 typically absorb a portion of incoming IR radiation 150 so that less IR radiation is passed through to sensor 10. The dotted lines of attenuated IR radiation 220 indicate that the amount of IR radiation passed through window 140 is less than the amount of incoming IR radiation 150. In general, the greater the amount of contaminants 210 deposited on window 140, the greater the absorption of incoming IR radiation 150, and therefore, the greater the attenuation resulting in IR radiation 220.

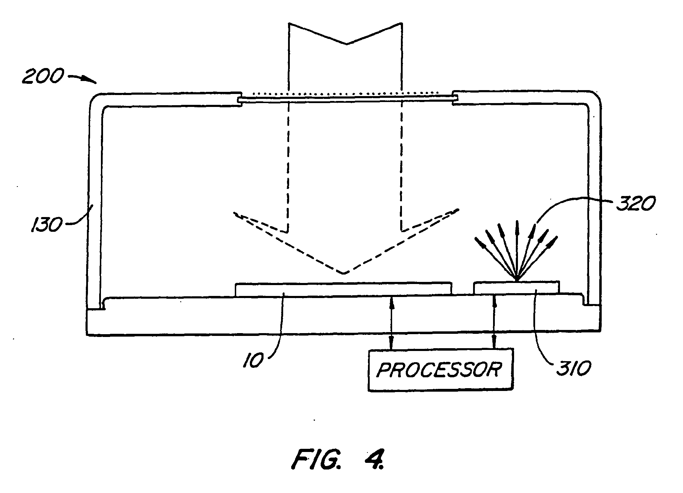

Figure 4 is a schematic diagram showing an arrangement of an IR sensing device 200 including an IR radiator 310 according to an embodiment of the present invention. There is mounted within the enclosure 130 an IR radiating device 310 which is electrically controlled to emit IR radiation 320. Preferably, IR radiating device 310 is thermally isolated from IR sensor 10 so as to avoid heat transfer from IR radiating device 310 by either conduction or direct radiation.

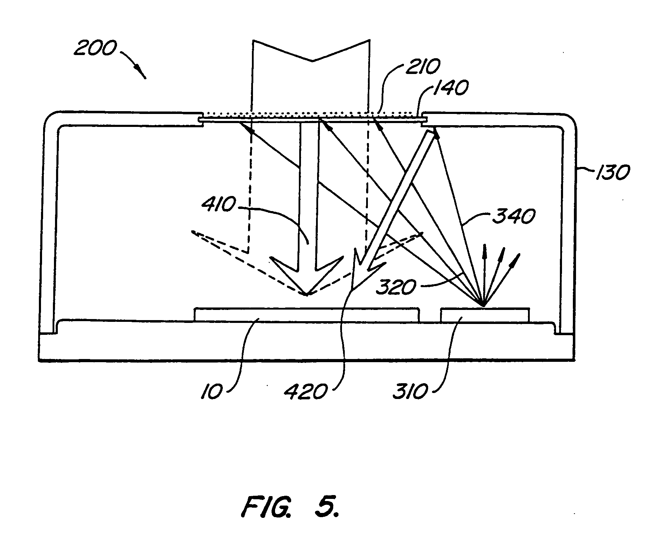

Figure 5 is a schematic diagram showing the effects of IR radiation emitted from IR radiator 310 in IR sensing device 200. When an electrical signal is applied to IR radiating device 310, IR radiation 320 is emitted. Some of the radiated energy 320 falls on IR window 140. If window 140 is free of contaminants 210, IR radiation 320 passes through window 140 and is dissipated into the surrounding environment. When window 140 is obscured wholly or partially by an IR-opaque contaminant 210, some of radiated energy 320 is absorbed by contaminant 210. The temperature of contaminant 210 increases as a direct result of the absorption of radiated energy 320, thereby causing a corresponding increase in the level of IR radiation 410 emitted from contaminant 210. This increase in IR radiation 410 is detected by IR sensor 10. It will be appreciated that some of the IR radiation 340 radiated by IR radiator 310 does not fall on window 140, but rather falls on the inside of enclosure 130. This causes a temperature rise in enclosure 130. This temperature rise results in a corresponding increase in IR radiation 420 emitted by enclosure 130 which is also detected by IR sensor 10.

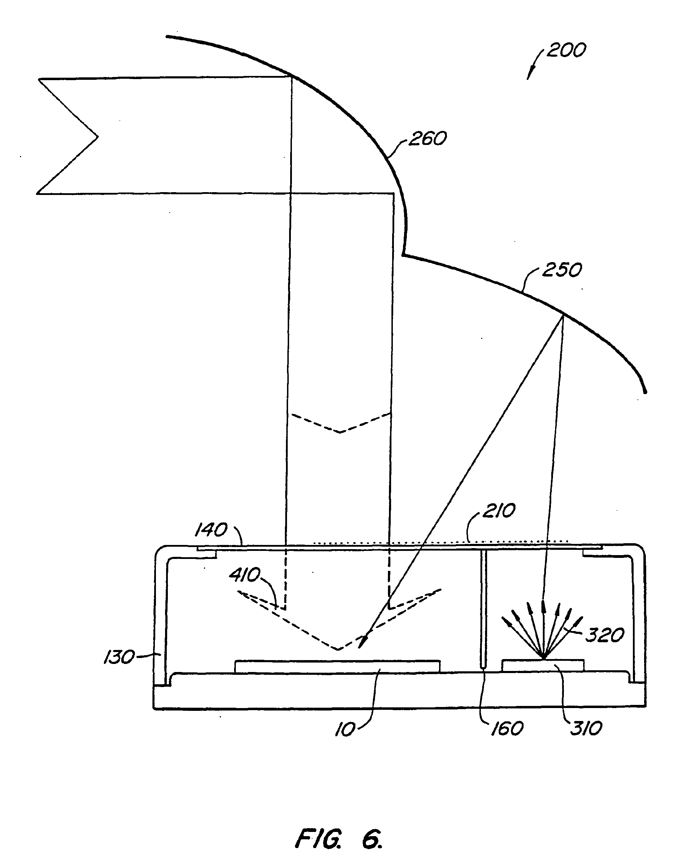

Figure 6 is a schematic diagram showing an arrangement of an IR sensing device 200 including an IR radiator 310 and a mirror arrangement according to an embodiment of the present invention. As shown, there is mounted within the enclosure 130 an IR radiating device 310 which is electrically controlled to emit IR radiation 320. Preferably, IR radiating device 310 is thermally screened from IR sensor 10 by a screen 160 so as to avoid heat transfer from IR radiating device 310 by either conduction or direct radiation.

When an electrical signal is applied to IR radiating device 310, IR radiation 320 is emitted. Some of the radiated energy 320 falls on IR window 140. If window 140 is free of contaminant(s) 210, IR radiation 320 passes through window 140 and is reflected back from mirror 250 such as to pass through window 140 and fall onto IR sensor 10. It will be appreciated that the magnitude of the radiation reflected back from mirror 250 is dependent upon the power emitted by IR radiator 310 and the amount of contamination 210 on window 140 and on mirror 250. Mirror 250 is made of material selected for its ability to reflect IR radiation at a specific frequency or at a range of radiation frequencies as required for specific applications.

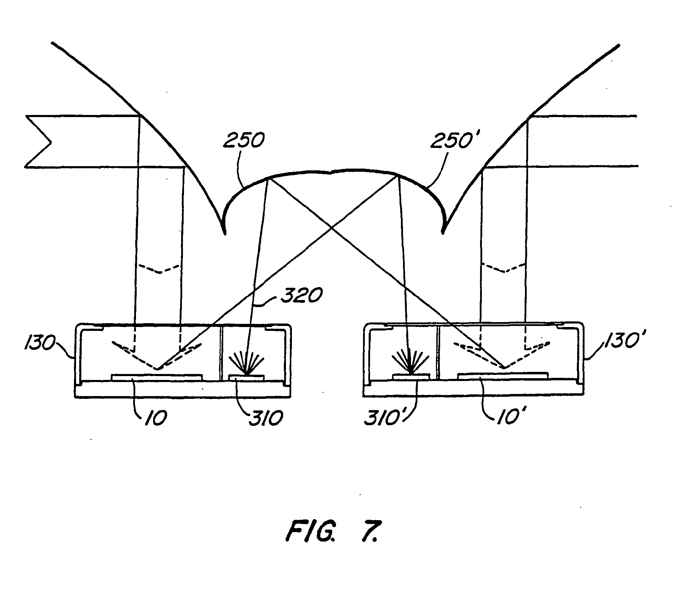

Figure 7 is a schematic diagram showing an arrangement of two IR sensors.

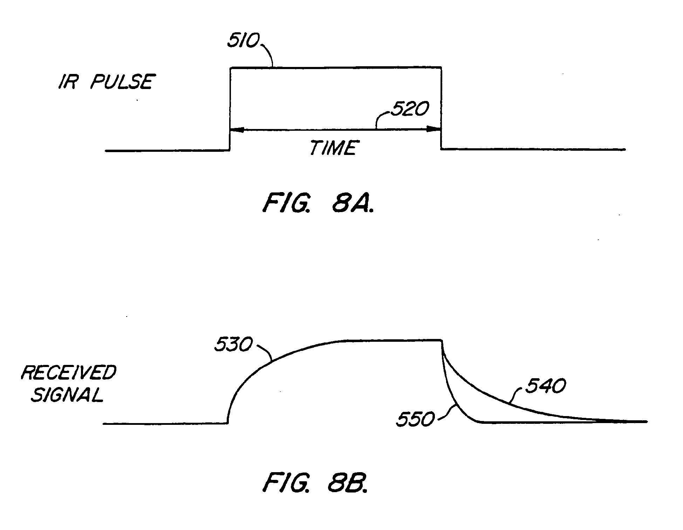

Figures 8a and 8b are schematic diagrams showing an example of an IR pulse emitted by radiator 310 and associated return signals (IR radiation emitted by contaminants 210), respectively, according to the present invention. When an electrical pulse 510 is applied to IR radiator 310 for a time 520, the signal generated by temperature measuring unit 13 of IR sensor 10 rises and falls in response to the IR radiation emitted by the enclosure and contaminants 210 as shown in Figure 6b. If there are no contaminants then the return signal 550 will have a shorter decay time. If contaminants are present, the return signal 540 from the contaminants will have a longer decay time. The decay time will vary depending on the specific contaminant(s). When radiator 310 is pulsed, for example for 50 milliseconds, sensor 10 sees a return signal dependent upon the heating effect of the outgoing pulse of IR radiation. This return signal will have a number of components each with their own characteristics (e.g., window contaminant component). Each component is separately measured as desired. The return signal is a good indication of the reduction of the effective area of window 140 since only the signal falling on IR-opaque contaminants 210 has a heating effect which therefore causes a temperature rise and a return signal. The greater the surface area of window 140 rendered opaque the greater the return signal.

Manual application of contaminants of differing composition allows for accurate re-calibration curves to be established and for a correct re-calibration constant to be programmed into the sensor device. Further, the rate at which the return signal decays is indicative of the thermal bonding between sensor 10 and the structure which may be indicative of corrosion in or around the sensor mounting.

Given that the thermal conductivity of the contamination is different from the thermal conductivity of the enclosure then by design, selection of materials or application of specific contaminants on window 140, the decay time of the temperatures of enclosure 130 and contaminants 210 will also be different. At the end of the radiated IR pulse the returned IR signals from contaminants 210 and enclosure 130 will show this difference. If there are no contaminants 210 then the return signal 550 will have a shorter decay time. If contaminants 210 are present, the return signal 540 from contaminants 210 will have a longer decay time.

Figures 8a also illustrates the example of an IR pulse emitted by radiator 310 which results in an associated reflected signal (IR radiation reflected by mirror 250) according an embodiment of the present invention. When an electrical pulse 510 is applied to IR radiator 310 for a time 520, the signal generated by temperature measuring unit 13 of IR sensor 10 rises and falls in response to the IR radiation reflected by mirror 250. If IR-opaque contaminants 210 are present on window 140, or on mirror 250, the reflected IR signal will have a reduced amplitude. The reduction in amplitude in the reflected signal relative to IR signal 320 will vary depending on the specific contaminant(s).

When window 140 is obscured wholly or partially by IR-opaque contaminant 210, some of reflected radiation is absorbed by contaminant 210. The temperature of contaminant 210 increases as a direct result of the absorption of this radiation, thereby causing a corresponding increase in the level of IR radiation 410 emitted by contaminant 210. This increase in IR radiation 410 is detected by IR sensor 10.

Figure 8b also illustrates an example of a return signal 530 (radiation emitted by contaminants on window 140) associated with the IR pulse of Figure 6a. When a small amount of contaminant(s) is present, the return signal 530 will have a shorter decay time 550. When a larger amount of contaminant(s) is present, the return signal 530 will have a longer decay time 540. The return signal 530 is dependent upon the specific contaminant(s) and upon the heating effect of the contaminant(s) by the reflected IR radiation signal.

An electronic signal processor, coupled to sensor 10 and to IR radiator 310, is provided to control IR radiator 310 and to receive and analyze the electrical signals from temperature measurement unit 13. The processor determines the characteristics of contaminant(s) 210 and determines the gain necessary to compensate for the difference in window transmissibility or mirror reflectance. In a preferred embodiment, the processor includes a digital microprocessor and an analog-to-digital converter (ADC). In this embodiment, signals received from temperature measuring unit 13 are applied to the ADC, and the resulting digital signals are then processed by the microprocessor. The compensation and calibration constants are stored in a memory such as a digital nonvolatile memory coupled to the processor.

It will be appreciated that additional signals can be generated by the signal processor to indicate the amount of contaminants 210 on window 140 or to signal that the magnitude of such contamination has exceeded a predetermined threshold and that the accuracy of the compensated signal may now be outside predetermined limits. It will be further appreciated that all or some of the components of the signal processor can be integrated into the same substrate 11 with IR sensor 10.

In addition to the detection of the degree of contamination on window 140 by IR-opaque material, the invention can also detect changes in the IR reflection characteristics of enclosure 130. This addition capability permits the generation by the signal processor of additional warning signals indicating deterioration of enclosure 130 due to contamination or leakage. A change in the rate of decay of the signal reflected from enclosure 130 is indicative of changes in the conditions of the mounting of the sensor 10 and/or enclosure 130 due perhaps to contamination, material deterioration such as corrosion or mechanical wear or creepage. Extraction of an indication of such changes from the return signals by the signal processor permits the generation of warning signals.

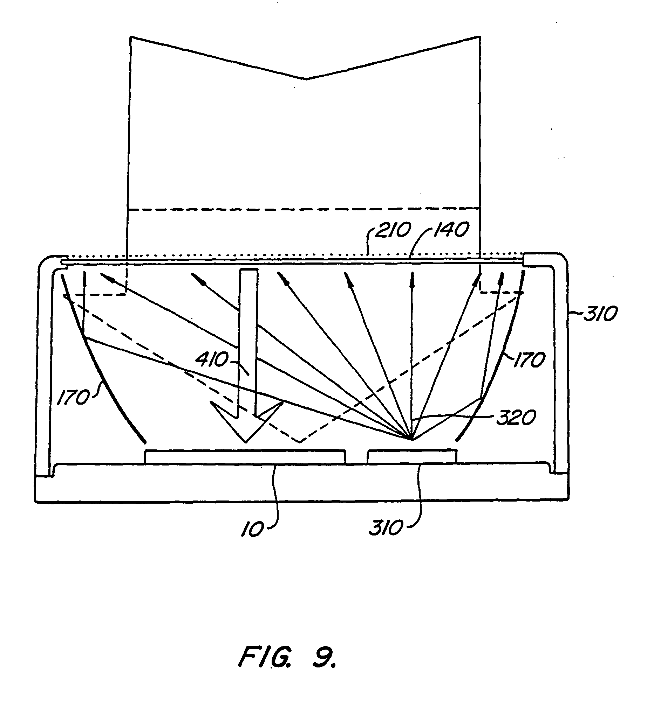

Figure 9 is a schematic diagram of an IR sensing device including an internal reflector arrangement. Reflector 170 focuses incoming IR radiation and focuses it onto IR sensor 10. As shown, reflector 170 preferably has a parabolic-shaped cross-section, however, it may have a linear cross-section, or any other curved cross-section. Reflector 170 is made out of material selected for its ability to reflect IR radiation at a specific frequency or at a range of radiation frequencies as required for specific applications. The internal mirror arrangement as shown in Figure 9 increases the effective size of IR sensor 10 since it increases the percentage of the incoming IR radiation that falls on IR sensor 10. Additionally, this internal mirror arrangement eliminates the effects of return signals from the inside of housing 130 due to the background radiation of the housing and internal contamination. Rather, the mirror arrangement reflects more of the IR radiation 320 from IR radiator 310 through window 140, so as to increase the heating effects of the IR radiation 320 on contaminants 210, thereby increasing the magnitude of the return signal generated by the contaminants 210. This helps ensure that the task of detecting the return signal from contaminants 210 in the midst of receiving IR radiation from a target source is not made more complex or expensive.

The addition of IR radiator 310 together with a means to control it allows the transmission efficiency of the window, and where relevant the reflectance efficiency of the mirror arrangement, to be determined and also to gain an indication of potential risks to the ongoing performance of the sensor installation. All such contraindications can be signaled to a controller (e.g., ECU or CPU) by means specific to the application.

In many typical applications, the temperature of a target source is measured by focussing, or directing, radiation from the target source onto the sensing element using one or more mirrors. An embodiment of such a mirror arrangement is also shown schematically in figure 4. It will be appreciated that the mirror 260 has similar characteristics to mirror 250 and can easily be constructed from the same materials and formed at the same time. Alternately, mirror 260 can be a separate component.

The shape of mirror 250 is designed to reflect the radiation 320 from IR radiator 310 back onto IR sensing element 10. It will be appreciated that in a situation where more than one sensing device is installed in close and fixed proximity, the design of the mirror 250 can be more complex such as to reflect a first part of the IR radiation 320 back onto the sensing element 10 within housing 130 and a second part of the IR radiation 320 onto the sensing element 10' in a second housing 130', as shown in Figure 7, for example. The IR radiation reflected onto IR sensor 10 in housing 130 will cause sensor 10 to generate a first electrical signal, and the IR radiation reflected onto the IR sensor 10' in the second housing 130' will cause sensor 10' to generate a second electrical signal. In a like manner, the IR radiator 310' and mirror 250' associated with the second sensing device can be arranged to reflect part of the IR radiation from the IR radiator 310' in the second housing 130' onto the IR sensor 10' in the second housing 130' and part onto the IR sensor 10 in housing 130: Mirrors 250 and 250' are preferably separate, but can be formed as one integral mirror as desired.

If the timings of the electrical pulses applied to the IR radiators 310 and 310' in the two housings are non-overlapping, then by comparison of the electrical signals generated by the IR sensors 10 and 10', the effects of contamination on that part of the window 140 used for transmission and that part used for reception of the main radiation 410 can be determined. Additionally, gain control values based on the attenuation of the main signal 410 can be computed.

The following features may be provided independently or in combination with any other features.

A signal processing means which generates signals indicating the level of IR opaque contamination on the IR transparent window.

An inner surface of the enclosure which reflects IR radiation, wherein the signal processing means generates signals indicating deterioration of the inner surface of the enclosure determined by a change in IR reflectivity of the inner surface.

A mounting means for mounting the IR sensing means to the enclosure, wherein the signal processing means generates signals indicating deterioration of the mounting means.

A sensor means integrated in a substrate.

An interface means and signal processing means integrated into the same substrate as a sensing means.

An IR radiating means integrated into the same substrate as a sensing means.

A signal processing means including a microcontroller.

A mirror element with a parabolic cross-section.

Determination of the deterioration of the mounting means by changes in the time constants of the decay of the temperature of the enclosure.

A screen located within the enclosure between the IR radiating means and the IR sensing means.

A memory coupled to the signal processing means, wherein the calibration and configuration for the signal processing means is stored in the memory.

An IR sensing means including a sensing element for absorbing IR radiation, the device further comprising a heating means for raising the temperature of the sensing element by a controlled amount to assist in calibrating the sensing element.

While the invention has been described by way of example and in terms of the specific embodiments, it is to be understood that the invention is not limited to the disclosed embodiments. On the contrary, it is intended to cover various modifications and similar arrangements as would be apparent to those skilled in the art. For example, although pulsed IR radiation signals are discussed, one skilled in the art will realize that sinusoidal varying IR radiation signals can be used.

## Claims

1. An Infra Red (IR) sensing device comprising:
an IR sensor (10) for detecting IR radiation, wherein the IR sensor generates electrical signals in response to and indicative of IR radiation detected by the IR sensor;
an IR opaque enclosure (130) surrounding the IR sensor, the enclosure having an IR transparent window (140) positioned to allow IR radiation (150) passing inwardly through the window from outside the enclosure to fall on the IR sensor;
an IR radiator (310) positioned within the enclosure to emit a first IR radiation signal outwardly through the window, wherein at least a portion of the IR radiation passing outwardly through the window is absorbed by IR-absorbing material on the window, wherein the IR absorbing material emits a return IR radiation signal that is detected by the IR sensor, and wherein the IR sensor generates a first electric signal proportional to the return IR radiation signal;
a first control means for controlling the IR radiator to radiate IR energy for a known period;
a processor coupled to the IR sensor for analyzing the electrical signals generated by the IR sensor, to determine the degree of contamination obscuring the IR transparent window by measuring the shape and characteristics of the first electrical signal during and after the known period.

2. The device of claim 1, wherein the return signal is further proportional to the amount of attenuation caused by the IR-absorbing material, wherein the IR sensor also detects a remote IR radiation signal generated by a remote target object, wherein the remote signal is attenuated by the IR-absorbing material on the window by a first amount, wherein the IR sensor generates a second signal proportional to the attenuated remote signal, and wherein the processor determines the gain needed to compensate for the first amount of attenuation caused by the IR absorbing material when analyzing the second electric signal.

3. The device of claim 1, wherein the IR sensor includes an IR absorbing portion coupled to a temperature measuring unit, wherein when the IR absorbing portion absorbs IR radiation its temperature increases by a proportional amount, and wherein the temperature measuring unit measures the temperature of the IR absorbing portion and generates the electrical signals, wherein the electrical signals are indicative of the temperature of the IR absorbing portion.

4. The device of claim 3, wherein the IR sensor further includes a heating element coupled to the IR absorbing portion, wherein the heating element is configured to raise the temperature of the IR absorbing portion by a controlled amount so as to assist in calibrating the IR sensor.

5. The device of claim 1, wherein the control means controls the IR radiator to emit the first IR radiation signal in the form of one or more pulses, wherein the return signal includes one or more decaying pulses, and wherein the processor analyzes the first electric signal to determine the decay time of the decaying pulses.

6. The device of claim 1, wherein the processor further includes a means for modifying the characteristics of the electrical signals generated by the IR sensor in response to any IR radiation detected from a remote target object so as to compensate for the degree of contamination obscuring the window.

7. The device of claim 1, wherein the housing has an inner surface that reflects IR radiation, wherein if the inner surface of the housing is deteriorated it absorbs a second portion of the first IR radiation signal generated by the IR radiator, wherein the inner surface emits a second return IR radiation signal that is detected by the IR sensor, and wherein the IR sensor generates a second electric signal proportional to the second return signal.

8. The device of claim 7, wherein the processor includes a means for determining an amount of deterioration of the inner surface of the housing from the second electric signal.

9. The device of claim 1, wherein the processor includes a means for determining an amount of IR-absorbing material on the window using the characteristics of the return signal.

10. The device of claim 1, further comprising a memory unit coupled to the processor, wherein the processor determines at least one calibration constant from the characteristics of the return signal, and wherein the processor stores the at least one calibration constant to the memory unit.

11. A method of measuring the temperature of a remote target object with an IR sensing device, wherein the IR sensing device includes an IR sensor mounted in a housing, the housing having a window through which IR radiation from a remote target object enters the device and impinges on the IR sensor, the method comprising the steps of:
generating a first IR radiation signal for a known period with an IR radiator located within the housing and arranged to emit radiation outwardly through the window, such that if there is IR-absorbing contamination on the window, the contamination absorbs at least a first portion of the first IR radiation signal and emits a return IR radiation signal;
detecting the return IR radiation signal with the IR sensor;
generating a first electric signal in response to the return IR radiation signal, wherein the first electric signal is proportional to the return signal;
analyzing the first electric signal with a processor to determine the amount of IR radiation in the return signal, wherein the amount of IR radiation in the return signal is indicative of the amount of IR absorbing contamination on the window wherein the processor determines the degree of contamination by measuring the shape and characteristics of the first electrical signal during and after the known period ; and
thereafter detecting a remote IR radiation signal generated by the remote object, wherein the remote IR radiation signal is indicative of the temperature of the remote object, wherein the remote signal is attenuated by a first amount by the IR absorbing contamination before being detected by the IR sensor; and
compensating for the first amount of attenuation in the detected remote IR radiation signal so as to accurately determine the temperature of the remote object.

12. The method of claim 11, further comprising the steps of:
determining a calibration constant with the processor, wherein the calibration constant is a function of the amount of IR absorbing contamination on the window; and
storing the calibration constant to a memory unit for later use.

13. The method of claim 12, wherein the step of compensating includes applying the calibration constant to the detected remote IR radiation signal.

14. The method of claim 11, wherein the first IR radiation signal is generated in the form of one or more pulses, wherein the return signal includes one or more decaying pulses, and wherein the step of analyzing includes analyzing the first electric signal to determine the decay time of the decaying pulses.

15. The method of claim 11, wherein the housing has an inner surface that reflects IR radiation, wherein if the inner surface of the housing is deteriorated it absorbs a second portion of the first IR radiation signal generated by the IR radiator, the method further including the steps of:
emitting a second return IR radiation signal by the inner surface of the housing;
detecting the second return IR radiation signal with the IR sensor; and generating a second electric signal proportional to the second return signal.

16. The method of claim 15, further including the step of determining an amount of deterioration of the inner surface of the housing from the second electric signal.

17. The device of claim 1, wherein the processor generates signals indicating the level of IR opaque contamination on the IR transparent window.

18. The device of claim 1, further comprising a mounting means for mounting the IR sensor to the enclosure, wherein the processor generates signals indicating deterioration of the mounting means.

19. The device of claim 18, wherein the deterioration of the mounting means is determined by changes in the time constants of the decay of the temperature of the enclosure.

20. The device of claim 1, wherein the IR sensor is integrated in a substrate, and wherein electronic interface means and the processor are integrated into the same substrate as the IR sensor.

21. The device of claim 1, wherein the IR sensor is integrated in a substrate, and wherein the IR radiator is integrated into the same substrate as the IR sensor.

22. The device of claim 1, wherein the processor includes a microcontroller.

23. The device of claim 1, further comprising a memory coupled to the processor,
wherein the calibration and configuration for the processor is implemented in the memory.

24. The device of claim 1, wherein the IR sensor includes a sensing element for absorbing IR radiation, the device further comprising a heating means for raising the temperature of the sensing element by a controlled amount to assist in calibrating the sensing element.

## Patentansprüche

1. Infrarot-Abfühlvorrichtung (IR-Abfühlvorrichtung), die umfasst:
einen IR-Sensor (10), um IR-Strahlung zu detektieren, wobei der IR-Sensor in Reaktion auf durch den IR-Sensor detektierte IR-Strahlung elektrische Signale erzeugt, die diese IR-Strahlung angeben;
eine IR-undurchlässige Umschließung (130), die den IR-Sensor umgibt, wobei die Umschließung ein IR-durchlässiges Fenster (140) besitzt, das so positioniert ist, dass es zulässt, dass IR-Strahlung (150) von außerhalb der Umschließung durch das Fenster in die Umschließung eintritt, um auf den IR-Sensor aufzutreffen;
einen IR-Strahler (310), der in der Umschließung positioniert ist, um ein erstes IR-Strahlungssignal durch das Fenster nach außen zu emittieren, wobei wenigstens ein Teil der durch das Fenster nach außen sich bewegenden IR-Strahlung durch IR-absorbierendes Material auf dem Fenster absorbiert wird, wobei das IR-absorbierende Material ein Rückkehr-IR-Strahlungssignal emittiert, das durch den IR-Sensor detektiert wird, und wobei der IR-Sensor ein zu dem Rückkehr-IR-Strahlungssignal proportionales erstes elektrisches Signal erzeugt;
ein erstes Steuermittel, um den IR-Strahler zu steuern, damit er für eine bekannte Zeitdauer IR-Energie abstrahlt;
einen Prozessor, der mit dem IR-Sensor gekoppelt ist, um die durch den IR-Sensor erzeugten elektrischen Signale zu analysieren, um den Grad der Verunreinigung zu bestimmen, die das IR-durchlässige Fenster weniger durchlässig macht, indem die Form und die Eigenschaften des ersten elektrischen Signals während und nach der bekannten Zeitdauer gemessen werden.

2. Vorrichtung nach Anspruch 1, wobei das Rückkehrsignal ferner zu dem Betrag der Dämpfung, die durch das IR-absorbierende Material hervorgerufen wird, proportional ist, wobei der IR-Sensor außerdem ein durch ein entferntes Zielobjekt erzeugtes fernes IR-Strahlungssignal detektiert, wobei das ferne Signal durch das IR-absorbierende Material auf dem Fenster um einen ersten Betrag gedämpft wird, wobei der IR-Sensor ein zweites Signal erzeugt, das zu dem gedämpften fernen Signal proportional ist, und wobei der Prozessor den Verstärkungsfaktor bestimmt, der notwendig ist, um den ersten Betrag der Dämpfung, die durch das IR-absorbierende Material hervorgerufen wird, auszugleichen, wenn das zweite elektrische Signal analysiert wird.

3. Vorrichtung nach Anspruch 1, wobei der IR-Sensor einen IR-absorbierenden Abschnitt aufweist, der mit einer Temperaturmesseinheit gekoppelt ist, wobei dann, wenn der IR-absorbierende Abschnitt IR-Strahlung absorbiert, dessen Temperatur um einen proportionalen Betrag ansteigt, und wobei die Temperaturmesseinheit die Temperatur des IR-absorbierenden Abschnitts misst und die elektrischen Signale erzeugt, wobei die elektrischen Signale die Temperatur des IR-absorbierenden Abschnitts angeben.

4. Vorrichtung nach Anspruch 3, wobei der IR-Sensor ferner ein mit dem IR-absorbierenden Abschnitt gekoppeltes Heizelement aufweist, wobei das Heizelement so konfiguriert ist, dass es die Temperatur des IR-absorbierenden Abschnitts um einen gesteuerten Betrag erhöht, um so die Kalibrierung des IR-Sensors zu unterstützen.

5. Vorrichtung nach Anspruch 1, wobei die Steuermittel den IR-Strahler steuern, damit er das erste IR-Strahlungssignal in Form eines oder mehrerer Impulse emittiert, wobei das Rückkehrsignal einen oder mehrere abfallende Impulse enthält und wobei der Prozessor das erste elektrische Signal analysiert, um die Abfallzeit der abfallenden Impulse zu bestimmen.

6. Vorrichtung nach Anspruch 1, wobei der Prozessor ferner ein Mittel enthält, um die Eigenschaften der durch den IR-Sensor erzeugten elektrischen Signale in Reaktion auf irgendeine IR-Strahlung, die von einem entfernten Zielobjekt detektiert wird, zu modifizieren, um so den Grad der Verunreinigung, die das Fenster weniger durchlässig macht, auszugleichen.

7. Vorrichtung nach Anspruch 1, wobei das Gehäuse eine innere Oberfläche besitzt, die IR-Strahlung reflektiert, wobei die innere Oberfläche des Gehäuses dann, wenn sie verschlechtert ist, einen zweiten Anteil des ersten IR-Strahlungssignals, das durch den IR-Strahler erzeugt wird, absorbiert, wobei die innere Oberfläche ein zweites Rückkehr-IR-Strahlungssignal emittiert, das durch den IR-Sensor detektiert wird, und wobei der IR-Sensor ein zweites elektrisches Signal erzeugt, das zu dem zweiten Rückkehrsignal proportional ist.

8. Vorrichtung nach Anspruch 7, wobei der Prozessor ein Mittel zum Bestimmen eines Betrags der Verschlechterung der inneren Oberfläche des Gehäuses aus dem zweiten elektrischen Signal enthält.

9. Vorrichtung nach Anspruch 1, wobei der Prozessor ein Mittel enthält, um einen Betrag eines IR-absorbierenden Materials auf dem Fenster unter Verwendung der Eigenschaften des Rückkehrsignals zu bestimmen.

10. Vorrichtung nach Anspruch 1, die ferner eine Speichereinheit umfasst, die mit dem Prozessor gekoppelt ist, wobei der Prozessor wenigstens eine Kalibrierungskonstante aus den Eigenschaften des Rückkehrsignals bestimmt und wobei der Prozessor die wenigstens eine Kalibrierungskonstante in der Speichereinheit speichert.

11. Verfahren zum Messen der Temperatur eines entfernten Zielobjekts mit einer IR-Abfühlvorrichtung, wobei die IR-Abfühlvorrichtung einen IR-Sensor enthält, der in einem Gehäuse angebracht ist, wobei das Gehäuse ein Fenster besitzt, durch das IR-Strahlung von einem entfernten Zielobjekt in die Vorrichtung eintritt und auf den IR-Sensor auftrifft, wobei das Verfahren die folgenden Schritte umfasst:
Erzeugen eines ersten IR-Strahlungssignals für eine bekannte Zeitdauer mit einem IR-Strahler, der sich innerhalb des Gehäuses befindet und dazu ausgelegt ist, Strahlung durch das Fenster nach außen zu emittieren, derart, dass dann, wenn sich auf dem Fenster eine IR-absorbierende Verunreinigung befindet, die Verunreinigung wenigstens einen ersten Anteil des ersten IR-Strahlungssignals absorbiert und ein Rückkehr-IR-Strahlungssignal emittiert;
Detektieren des Rückkehr-IR-Strahlungssignals mit dem IR-Sensor;
Erzeugen eines ersten elektrischen Signals in Reaktion auf das Rückkehr-IR-Strahlungssignal, wobei das erste elektrische Signal zu dem Rückkehrsignal proportional ist;
Analysieren des ersten elektrischen Signals mit einem Prozessor, um den Betrag der IR-Strahlung in dem Rückkehrsignal zu bestimmen, wobei der Betrag der IR-Strahlung in dem Rückkehrsignal den Betrag der IR-absorbierenden Verunreinigung auf dem Fenster angibt, wobei der Prozessor den Grad der Verunreinigung durch Messen der Form und der Eigenschaften des ersten elektrischen Signals während und nach der bekannten Zeitdauer bestimmt; und
danach Detektieren eines entfernten IR-Strahlungssignals, das durch das entfernte Objekt erzeugt wird, wobei das entfernte IR-Strahlungssignal die Temperatur des entfernten Objekts angibt, wobei das entfernte Signal durch die IR-absorbierende Verunreinigung um einen ersten Betrag gedämpft wird, bevor es durch den IR-Sensor detektiert wird; und
Ausgleichen des ersten Dämpfungsbetrags in dem detektierten entfernten IR-Strahlungssignal, um so die Temperatur des entfernten Objekts genau zu bestimmen.

12. Verfahren nach Anspruch 11, das ferner die folgenden Schritte umfasst:
Bestimmen einer Kalibrierungskonstante mit dem Prozessor, wobei die Kalibrierungskonstante eine Funktion des Betrags der IR-absorbierenden Verunreinigung auf dem Fenster ist; und
Speichern der Kalibrierungskonstante in einer Speichereinheit zur späteren Verwendung.

13. Verfahren nach Anspruch 12, wobei der Ausgleichsschritt das Anwenden der Kalibrierungskonstante auf das detektierte entfernte IR-Strahlungssignal umfasst.

14. Verfahren nach Anspruch 11, wobei das erste IR-Strahlungssignal in Form eines oder mehrerer Impulse erzeugt wird, wobei das Rückkehrsignal einen oder mehrere abfallende Impulse enthält und wobei der Schritt des Analysierens das Analysieren des ersten elektrischen Signals umfasst, um die Abfallzeit der abfallenden Impulse zu bestimmen.

15. Verfahren nach Anspruch 11, wobei das Gehäuse eine innere Oberfläche besitzt, die IR-Strahlung reflektiert, wobei die innere Oberfläche des Gehäuses dann, wenn sie sich verschlechtert, einen zweiten Anteil des ersten IR-Strahlungssignals, das durch den IR-Strahler erzeugt wird, absorbiert, wobei das Verfahren ferner die folgenden Schritte umfasst:
Emittieren eines zweiten Rückkehr-IR-Strahlungssignals durch die innere Oberfläche des Gehäuses;
Detektieren des zweiten Rückkehr-IR-Strahlungssignals mit dem IR-Sensor; und
Erzeugen eines zweiten elektrischen Signals, das zu dem zweiten Rückkehrsignal proportional ist.

16. Verfahren nach Anspruch 15, das ferner den Schritt des Bestimmens eines Verschlechterungsgrades der inneren Oberfläche des Gehäuses aus dem zweiten elektrischen Signal umfasst.

17. Vorrichtung nach Anspruch 1, wobei der Prozessor Signale erzeugt, die den Pegel der IR-undurchlässigen Verunreinigung auf dem IR-durchlässigen Fenster angeben.

18. Vorrichtung nach Anspruch 1, die ferner ein Montagemittel umfasst, um den IR-Sensor an der Umschließung anzubringen, wobei der Prozessor Signale erzeugt, die eine Verschlechterung der Montagemittel angeben.

19. Vorrichtung nach Anspruch 18, wobei die Verschlechterung der Montagemittel durch Änderungen der Zeitkonstanten des Abfalls der Temperatur der Umschließung bestimmt wird.

20. Vorrichtung nach Anspruch 1, wobei der IR-Sensor in ein Substrat integriert ist und wobei elektronische Schnittstellenmittel und der Prozessor in dasselbe Substrat wie der IR-Sensor integriert sind.

21. Vorrichtung nach Anspruch 1, wobei der IR-Sensor in ein Substrat integriert ist und wobei der IR-Strahler in dasselbe Substrat wie der IR-Sensor integriert ist.

22. Vorrichtung nach Anspruch 1, wobei der Prozessor einen Mikrocontroller enthält.

23. Vorrichtung nach Anspruch 1, die ferner einen mit dem Prozessor gekoppelten Speicher umfasst, wobei die Kalibrierung und die Konfiguration für den Prozessor in dem Speicher implementiert sind.

24. Vorrichtung nach Anspruch 1, wobei der IR-Sensor ein Abfühlelement zum Absorbieren von IR-Strahlung enthält, wobei die Vorrichtung ferner ein Heizmittel umfasst, um die Temperatur des Abfühlelements um einen gesteuerten Betrag zu erhöhen, um die Kalibrierung des Abfühlelements zu unterstützen.

## Revendications

1. Dispositif de détection d'infrarouge (IR) comprenant :
un capteur IR (10) destiné à détecter un rayonnement IR, dans lequel le capteur IR génère des signaux électriques en réponse à un rayonnement IR, et indiquant celui-ci, détecté par le capteur IR ;
une enceinte opaque IR (130) entourant le capteur IR, l'enceinte ayant une fenêtre transparente IR (140) positionnée de façon à permettre un rayonnement IR (150) de passer à l'intérieur par l'intermédiaire de la fenêtre depuis l'extérieur de l'enceinte pour arriver sur le capteur IR ;
un dispositif d'émission de rayonnement IR (310) positionné à l'intérieur de l'enceinte pour émettre un premier signal de rayonnement IR vers l'extérieur par l'intermédiaire de la fenêtre, dans lequel au moins une portion du rayonnement IR passant à l'extérieur par l'intermédiaire de la fenêtre est absorbée par un matériau d'absorption IR sur la fenêtre, dans lequel le matériau d'absorption IR émet un signal de rayonnement IR retour qui est détecté par le capteur IR, et dans lequel le capteur IR génère un premier signal électrique proportionnel au signal de rayonnement IR retour ;
un premier moyen de commande destiné à commander le dispositif d'émission du rayonnement IR pour émettre un rayonnement d'une énergie IR pendant une période connue ;
un processeur couplé au capteur IR destiné à analyser les signaux électriques générés par le capteur IR pour déterminer le degré de contamination obscurcissant la fenêtre transparente IR grâce à la mesure de la forme et des caractéristiques du premier signal électrique au cours de la période connue et après celle-ci.

2. Dispositif selon la revendication 1, dans lequel le signal retour est en outre proportionnel à la quantité de l'affaiblissement provoqué par le matériau d'absorption IR, dans lequel le capteur IR détecte également un signal de rayonnement IR distant généré par un objet cible distant, dans lequel le signal distant est affaibli d'une première quantité par le matériau d'absorption IR sur la fenêtre, dans lequel le capteur IR génère un second signal proportionnel au signal distant affaibli, et dans lequel le processeur détermine le gain nécessaire pour compenser la première quantité de l'affaiblissement provoqué par le matériau d'absorption IR lors de l'analyse du second signal électrique.

3. Dispositif selon la revendication 1, dans lequel le capteur IR comporte une portion d'absorption IR couplée à une unité de mesure de température, dans lequel lorsque la portion d'absorption IR absorbe un rayonnement IR, sa température augmente d'une quantité proportionnelle, et dans lequel l'unité de mesure de température mesure la température de la portion d'absorption IR et génère les signaux électrique, dans lequel les signaux électriques sont une indication de la température de la portion d'absorption IR.

4. Dispositif selon la revendication 3, dans lequel le capteur IR comporte en outre un élément chauffant couplé à la portion d'absorption IR, dans lequel l'élément chauffant est configuré de façon à faire monter la température de la portion d'absorption IR d'une quantité commandée de façon à contribuer à l'étalonnage du capteur IR.

5. Dispositif selon la revendication 1, dans lequel le moyen de commande commande le dispositif d'émission de rayonnement IR pour émettre le premier signal de rayonnement IR sous la forme d'une ou plusieurs impulsions, dans lequel le signal retour comporte une ou plusieurs impulsions descendantes, et dans lequel le processeur analyse le premier signal électrique pour déterminer le temps de descente des impulsions descendantes.

6. Dispositif selon la revendication 1, dans lequel le processeur comporte en outre un moyen de modification des caractéristiques des signaux électriques générés par le capteur IR en réponse à tout rayonnement IR quelconque détecté depuis un objet cible distant de façon à compenser le degré de contamination obscurcissant la fenêtre.

7. Dispositif selon la revendication 1, dans lequel le logement a une surface interne qui réfléchit un rayonnement IR, dans lequel si la surface interne du logement est détériorée, elle absorbe une seconde portion du premier signal de rayonnement IR générée par le dispositif d'émission de rayonnement IR, dans lequel la surface interne émet un second signal de rayonnement IR retour qui est détecté par le capteur IR, et dans lequel le capteur IR génère un second signal électrique proportionnel au second signal retour.

8. Dispositif selon la revendication 7, dans lequel le processeur comporte un moyen de détermination d'une quantité de détérioration de la surface interne du logement à partir du second signal électrique.

9. Dispositif selon la revendication 1, dans lequel le processeur comporte un moyen de détermination d'une quantité de matériau d'absorption IR sur la fenêtre au moyen des caractéristiques du signal retour.

10. Dispositif selon la revendication 1, comprenant en outre une unité de mémoire couplée au processeur, dans lequel le processeur détermine au moins une constante d'étalonnage à partir des caractéristiques du signal retour, et dans lequel le processeur stocke l'au moins une constante d'étalonnage dans l'unité de mémoire.

11. Procédé de mesure de la température d'un objet cible distant au moyen d'un dispositif de détection IR, dans lequel le dispositif de détection IR comporte un capteur IR monté dans un logement, le logement ayant une fenêtre à travers laquelle un rayonnement IR d'un objet cible distant entre dans le dispositif et affecte le capteur IR, le procédé comprenant les étapes consistant à :
générer un premier signal de rayonnement IR pendant une période connue au moyen d'un dispositif d'émission de rayonnement IR situé à l'intérieur du logement et agencé de façon à émettre un rayonnement vers l'extérieur par l'intermédiaire de la fenêtre, de sorte que s'il existe une contamination d'absorption IR sur la fenêtre, la contamination absorbe au moins une première portion du premier signal de rayonnement IR et émette un signal de rayonnement IR retour ;
détecter le signal de rayonnement IR retour avec le capteur IR ;
générer un premier signal électrique en réponse au signal de rayonnement IR retour, dans lequel le premier signal électrique est proportionnel au signal retour ;
analyser le premier signal électrique avec un processeur pour déterminer la quantité de rayonnement IR dans le signal retour, dans lequel la quantité de rayonnement IR dans le signal retour est une indication de la quantité de contamination d'absorption IR sur la fenêtre, dans lequel le processeur détermine le degré de contamination grâce à la mesure de la forme et des caractéristiques du premier signal électrique au cours de la période connue et après celle-ci ; et
par la suite, détecter un signal de rayonnement IR distant généré par l'objet distant, dans lequel le signal de rayonnement IR distant est une indication de la température de l'objet distant, dans lequel le signal distant est affaibli d'une première quantité par la contamination d'absorption IR avant d'être détecté par le capteur IR ; et
compenser la première quantité d'affaiblissement dans le signal de rayonnement IR distant détecté de façon à déterminer précisément la température de l'objet distant.

12. Procédé selon la revendication 11, comprenant en outre les étapes consistant à :
déterminer une constante d'étalonnage avec le processeur, dans lequel la constante d'étalonnage est une fonction de la quantité de contamination d'absorption IR sur la fenêtre ; et
stocker la constante d'étalonnage dans une unité de mémoire pour une utilisation ultérieure.

13. Procédé selon la revendication 12, dans lequel l'étape de compensation comporte une étape consistant à appliquer la constante d'étalonnage au signal de rayonnement IR distant détecté.

14. Procédé selon la revendication 11, dans lequel le premier signal de rayonnement IR est généré sous la forme d'une ou plusieurs impulsions, dans lequel le signal retour comporte une ou plusieurs impulsions descendantes, et dans lequel l'étape d'analyse comporte une étape consistant à analyser le premier signal électrique pour déterminer le temps de descente des impulsions descendantes.

15. Procédé selon la revendication 11, dans lequel le logement a une surface interne qui réfléchit un rayonnement IR, dans lequel si la surface interne du logement est détériorée, elle absorbe une seconde portion du premier signal de rayonnement IR généré par le dispositif d'émission de rayonnement IR, le procédé comportant en outre les étapes consistant à :
émettre un second signal de rayonnement IR retour au moyen de la surface interne du logement ;
détecter le second signal de rayonnement IR retour avec le capteur IR ; et générer un signal électrique proportionnel au second signal retour.

16. Procédé selon la revendication 15, comportant en outre l'étape consistant à déterminer une quantité de détérioration de la surface interne du logement à partir du second signal électrique.

17. Dispositif selon la revendication 1, dans lequel le processeur génère des signaux indiquant le niveau de contamination opaque IR sur la fenêtre transparente IR.

18. Dispositif selon la revendication 1, comprenant en outre un moyen de montage destiné à monter le capteur IR sur l'enceinte, dans lequel le processeur génère des signaux indiquant une détérioration du moyen de montage.

19. Dispositif selon la revendication 18, dans lequel la détérioration du moyen de montage est déterminée par des changements dans les constantes de temps de la descente de la température de l'enceinte.

20. Dispositif selon la revendication 1, dans lequel le capteur IR est intégré dans un substrat, et dans lequel un moyen d'interface électronique et le processeur sont intégrés dans le même substrat que le capteur IR.

21. Dispositif selon la revendication 1, dans lequel le capteur IR est intégré dans un substrat, et dans lequel le dispositif d'émission de rayonnement IR est intégré dans le même substrat que le capteur IR.

22. Dispositif selon la revendication 1, dans lequel le processeur comporte un microcontrôleur.

23. Dispositif selon la revendication 1, comprenant en outre une mémoire couplée au processeur, dans lequel l'étalonnage et la configuration du processeur sont mis en oeuvre dans la mémoire.

24. Dispositif selon la revendication 1, dans lequel le capteur IR comporte un élément de détection destiné à absorber un rayonnement IR, le dispositif comprenant en outre un moyen de chauffage destiné à faire monter la température de l'élément de détection d'une quantité commandée pour contribuer à l'étalonnage de l'élément de détection.
